# EUROPEAN PATENT APPLICATION

(11) **EP 0 684 416 A1**
(43) Date of publication of application: **29.11.1995**
(21) Application number: 95830212.7
(22) Date of filing: 19.05.1995
(51) Int. Cl.: F16K 11/087, F16K 15/14, F16K 24/02

(54) **Hot and cold water mixer valve with built-in anti-backflow device**

(30) Priority: 24.05.1994 IT BS940051
(71) Applicant: GALATRON S.r.l., I-46043 Castiglione d/Stiviere (Mantova) (IT)
(72) Inventor: Orlandi, Alessio, I-46043 Castiglione D/Stiviere (Mantova) (IT); Orlandi, Roberto, I-46043 Castiglione D/Stiviere (Mantova) (IT)
(74) Representative: Manzoni, Alessandro

(57) **Abstract**

A mixer valve for hot and cold water especially as used in taps of plumbing appliances for which a "vacuum breaker" is required to prevent a backflow of water. The mixer valve comprises an anti-backflow device (D) incorporated in the bottom (12) of its body to inhibit the effect of a pressure drop that may be created on closing the mixer valve or that may cause suction and a return of water from the point of use to the supply system through the same valve.

## Description

The present invention pertains in general to mixer valves for hot and cold water, and more specifically to mixer valves to be used in taps for plumbing appliances in which an impediment is required, a so-called "vacuum breaker", for a non-return of the water towards the water supply system.

At present, various embodiments of mixer valves for hot and cold water are known which comprise, within a cartridge body, valve means comprising at least two overlapping plates, in ceramics or the like, provided with separate inlet passages for hot water and for cold water and with one outlet opening for hot, cold or mixed water flowing towards the spout of a tap. One of said plates is fixed and another plate is mobile and displaceable on the first one by means of a manoeuvring lever to open/close the valve.

Usually, hot water and cold water are conveyed to the inlet passages by means of adduction pipes connected to the bottom of the valve body; the water to be supplied comes out of the bottom or from a side of the cartridge body and is channelled to the tap spout.

In some cases, such as for instance in sinks or in other sanitary-plumbing appliances, the spout may be a pull-out shower connected to a flexible hose which channells the water from the mixer valve and which can be handled within the framework of the plumbing appliance. In these cases there are safety regulations providing for a non-return of the water back from the appliance to the water supply system, a condition which may occur when the mixer valve is shut off while the shower supply is kept or left unwittingly immersed in a volume of water and which may be the cause of pollution of the water in the system.

Then, a pressure drop can be created in the water channel so as to cause suction through the shower and therefore a flow of water back-towards the supply system.

It is an object of the present invention to provide a mixer valve for hot and cold water which can automatically prevent any return of water back towards the supply system due to suction through the water supply means.

Another object of the invention is to provide a mixer valve of the above mentioned type directly incorporating a non-return valve device, placed at the bottom of its cartridge body, at the level of the water inlet and/or outlet passages, advantageously without modifying the customary structure, dimensions, and method of using the valve.

Yet another object of the invention is to provide a mixer valve able to perform a dual function of mixing and controlling the flow of water to be supplied and of non-return device of the water towards the supply system once distributed.

An additional object of the invention is to provide a mixer valve that can be used advantageously also in applications for which safety regulations have to be observed that provide for mounting of a so-called "vacuum breaker", that is inhibition of any suction of water and therefore removal of a condition that may cause an undesired return of water towards the distribution system.

Said objects and advantages are achieved with a mixer valve of the above mentioned type and in conformity with the part described in claim 1.

Examples of practical embodiments of the invention will be further described herein under with reference to the accompanying drawings, in which:
Figure 1 is a perspective view of a mixer valve and, separately, a first example of a non-return device applicable to the inlet passages of the valve;
Figure 2 is an axial cross-sectional view of the valve incorporating the non-return device;
Figures 3 and 3a show a cross-sectional view of a detail of the non-return device in open and closed conditions, respectively;
Figure 4 is an axial cross-sectional view of the mixer valve incorporating another example of an anti-backflow device applied onto the water outlet opening of the valve;
Figures 5 and 5a show a cross-sectional view of a detail of the anti-backflow device incorporated in the valve of Fig. 4 in two different conditions, respectively open and closed;
Figure 6 is an axial cross-sectional view of the mixer valve incorporating another example of an anti-backflow device associated with the water outlet opening of the valve; and
Figures 7 and 7a show a cross-sectional view of a detail of the anti-backflow device as in Fig. 6, in open and closed conditions, respectively.

The mixer valve designed to receive the present invention comprises a cartridge body which may comprise an upturned cup element 11 and a bottom 12 closing the cup element; said bottom may be configured to act also as a distributor of the water flowing out of the valve. The bottom 12 is provided with two separate inlet passages 13, 14 for hot and cold water and with an outlet opening 15 for hot, cold or mixed water as preferred. The inlet passages 13, 14 receive water from two pipes - not represented - which supply hot and cold water in the direction of the arrows C and F - see Fig. 2; the opening of outlet 15 communicates, in the direction of the arrow U, with a spout or a water supply channel for use.

In the cartridge body, valve means are shown which usually comprise overlapping plates, in ceramics or the like, of which the lower one 16 is fixed and rests on the bottom 12 and the upper 17 is mobile and can be moved on the fixed plate by means of a manoeuvring lever 18 to control opening and closing of the valve. The fixed plate 16 is provided with two inlet holes 16a, 16b coinciding with the water inlet holes 13, 14 on the bottom 12 of the cartridge body and with an outlet hole 16c coinciding with the outlet opening in said bottom 12. The mobile plate 17 has in its turn a mixing chamber 17a which can be positioned over the holes 16a, 16b, 16c of the fixed plate 16 to control supply of water.

Use and operation of the mixer valve are in themselves known and are not worth any particular description here.

According to the invention, the mixer valve is equipped with a device D designed to inhibit the backflow of water from the point of use to the adduction pipes through the valve itself.

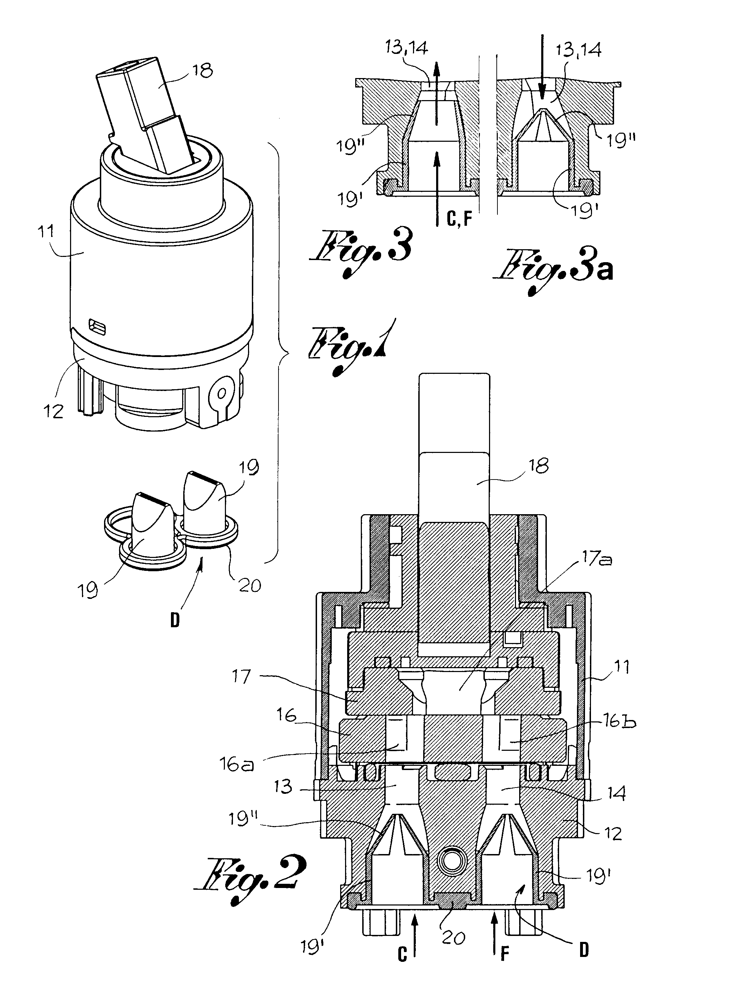

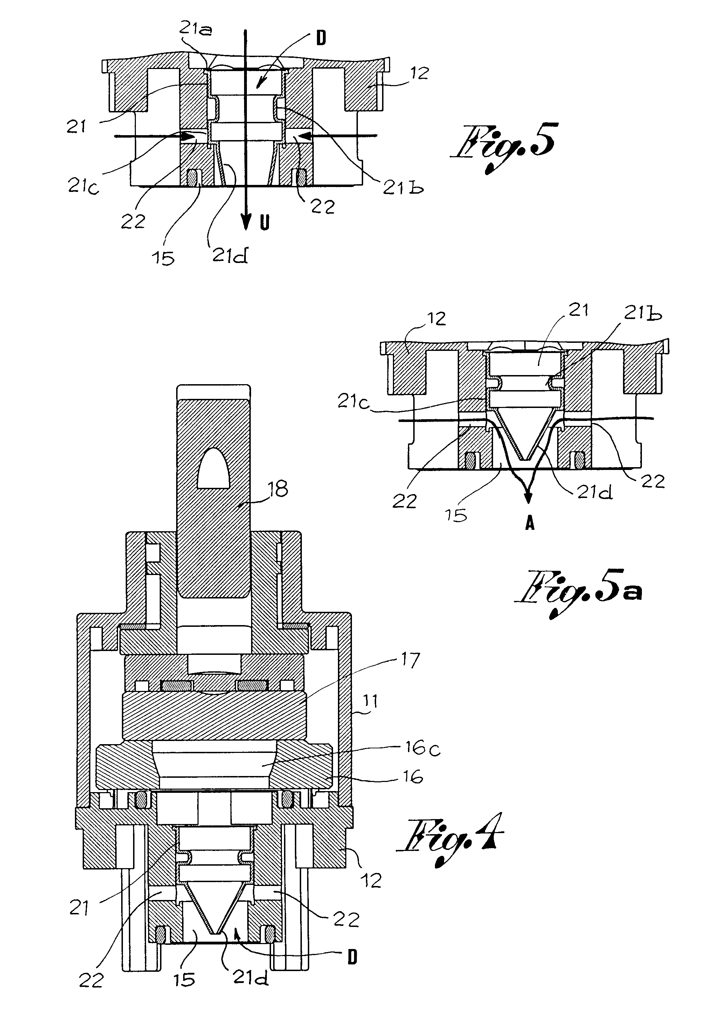

In a form of embodiment, said device D is applied in the water inlet holes 13, 14 provided in the bottom 12 of the cartridge body as shown in Figs. 1-3, 3a. It consists of two non-return valves 19, equal to each other, inserted respectively in said inlet holes 13, 14.

Said non-return valves 19 are at least partially in an elastic, rubber, or similar material and may be obtained to form one integral piece - see Fig. 1 - with a seal 20 applied usually on the base of the bottom 12 around the water inlet and outlet passages. Each non-return valve 19 has anyhow a static tubular portion 19', which closely adapts to the internal surface of the passage 13 or 14 in which it is inserted, and an expanding and contracting conical portion 19", tapered in the direction of the incoming flows of H and C water.

With the mixer valve closed, the non-return valves 19 move to a rest position in which they can stay slightly open at the level of their conical portion 19" as schematized in Fig. 2. On the other hand, with the mixer valve open, the pressure and the flow of water flowing in through the inlet holes 13, 14 cause opening of the non-return valves, as shown in Fig. 3, for a regular supply of water towards the point of use. On closing the mixer valve, any drop in pressure that may be created in the system and that could cause suction of water from the point of use determines a contraction and therefore closure of the non-return valves at the level of their conical portions 19", as shown in Fig. 3a, which prevents the backflow of water towards the adduction pipes.

In another form of embodiment of the invention, the anti-backflow device D consists of a valve element 21 inserted in the outlet opening 15 in the bottom of the cartridge body of the mixer valve and designed to close and open at least one air bleeder 22 made in a radial direction to said water outlet opening 15.

In the example shown in Figs. 4, 5, 5a, the valve element 21 is in an elastic material, of a tubular shape and inserted in the outlet opening 15 with the possibility to expand and contract in the direction of its length. Said valve element 21 has, in order from the entrance to the exit of said outlet opening 15, a peripheral flange 21 a anchoring the opening element 15, a first intermediate bellows portion 21 b that can expand and contract longitudinally, a second intermediate interception portion 21 designed to close the breather hole 22, and a conical end portion 21 d, that can expand and contract transversely and is tapered in the direction of the flow of outflowing water according to the arrow U.

When the mixer valve is open and the water flows out regularly through the outlet opening 15, the valve element 21, stimulated by the flow and by the pressure of the water, extends and expands as shown in Fig. 5, thereby closing the air inlet.

On closing the mixer valve, that is as soon as the flow and pressure of the water fail, the valve element contracts and closes up as shown in Fig. 5a, opening the air holes 22 and preventing backflow of the water.

As the holes 22 open, a flow of air is formed according to the arrows A from the outside that cancels any pressure drop that may be created in the channelling, thereby preventing suction of the water from the point of use.

In a constructive variant, instead of an extending-expanding valve element 21, a floating ram - not represented - may be used, again with the purpose of closing the breather holes 22 during distribution of water and of opening them on closing the valve to cancel the formation of a pressure drop and to eliminate water backflow.

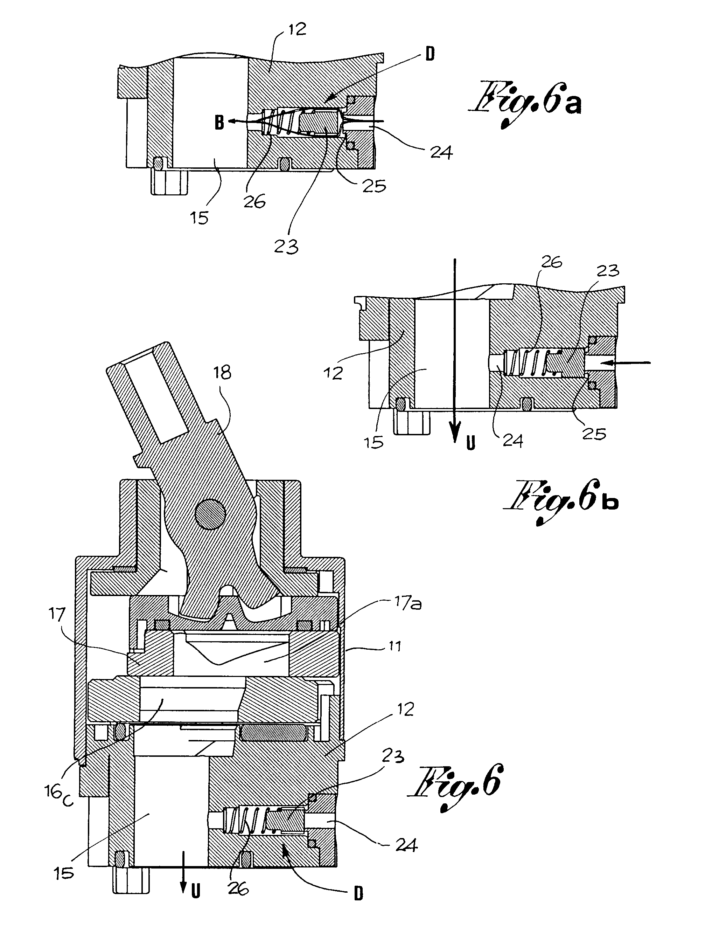

In an additional form of embodiment of the invention, the anti-backflow device D consists of a piston valve 23 placed in a breather hole 24 obtained in the bottom 12 of the cartridge body of the valve as shown in Figs. 6, 7 and 7a.

The breather hole 22 puts the water outlet opening 15 of the valve in communication with the atmosphere, and in said hole there is a valve seat 25 on which the piston valve acts to close/open the hole itself. The piston is triggered by a spring 26 that keeps it normally pushed against the valve seat 25 in the position of the breather hole closed. With the piston valve 23 in this position - see Fig. 7 - the water can be supplied normally as soon as the mixer valve is opened, without any air getting in from the outside.

On the contrary, on closing the mixer valve, the pressure drop that may be created in the water channelling at the point of use and therefore also in the opening 15, causes movement of the piston valve 23 in opposition to the action of the spring 26 - see Fig. 7a - which allows a flow of air from the outside according to the arrow B such as to cancel any action of suction and of backflow of water from the point of use.

Thus the objects mentioned in the preamble are achieved. It should moreover be noted that in one same mixer valve there may be anti-backflow means D of the above described type both in the water inlet passages and in the outlet opening at the same time for the utmost reliability of the system.

## Claims

1. A mixer valve for hot and cold water especially in taps of plumbing appliances for which a "vacuum breaker" is required to prevent backflow of water, including a cartridge body enclosing valve means to intercept and mix water and having a bottom (12) provided with separate hot and cold water inlet passages (13, 14) derived from a supply system and a water outlet opening (15) towards the point of use, characterized in that an anti-backflow device (D) is incorporated in said bottom (12) of the cartridge body to inhibit the effect of a pressure drop which may be created on closing the mixer valve and which may cause suction and a return of water from the point of use to the supply system through the mixer valve.

2. A mixer valve according to claim 1, wherein said anti-backflow device (D) is placed in each one of the hot and cold water inlet passages (13, 14).

3. A mixer valve according to claims 1 and 2, wherein said anti-backflow device (D) comprises two non-return valves (19) inserted respectively in said water inlet passages (13, 14), said non-return valves being in an elastic material and each one having a static tubular portion (19') that closely adapts to the inside surface of the respective inlet passage and a conical portion that can expand and contract (19") tapered in the direction of the incoming flow of water, said conical portion (19") expanding on the passage of water and contracting to close the passage in the presence of a pressure drop that causes suction of water from the point of use.

4. A mixer valve according to claim 3, wherein said non-return valves (19) are integral with a seal (20) applied on the base face of the bottom of the cartridge body.

5. A mixer valve according to claim 1, wherein said anti-backflow device (D) is placed in the water outlet opening (15) from the bottom of the cartridge body and is designed to close and open at least one breather hole (22) on one side of said outlet opening (15).

6. A valve according to claim 5, wherein said anti-backflow device (D) comprises a valve element (21) in an elastic material that translates in said water outlet opening between a closed position and an open position of said breather hole (22) which expands for the normal flow of the outgoing water when it is in the closed position of the breather hole and contracts to close the outlet opening when it is in the open position of the breather hole, such as to prevent the creation of a pressure drop likely to cause a backflow of water from the point of use.

7. A mixer valve according to claim 6, wherein said valve element (21) is a tubular element having a peripheral flange (21a) for anchoring in the water outlet opening (15), a first middle bellows portion (21b) for axial extension between the open and closed positions of the breather hole (22), a second middle portion (21 c) designed to open and close said breather hole (22), and a conical end position (21 d) that can expand and contract transversely and tapered in the direction of the outgoing flow of water.

8. A mixer valve according to claim 6, wherein said valve element (21) comprises a floating element with a ram in the water outlet opening.

9. A mixer valve according to claim 1, wherein said anti-backflow device (D) comprises a piston valve (23) placed in a breather hole (24) on one side of the water outlet opening (15) from the bottom of the cartridge body.

10. A mixer valve according to claim 9, wherein said piston valve (23) interacts with a valve seat (25) to open and close said breather hole, a spring (26) keeping the piston valve resting on said valve seat to close the breather hole while water is flowing out through said outlet opening, whereas a pressure drop at the level of said opening causes a movement of the piston valve to open the breather hole to cancel every effect of suction of the water from the point of use.

11. A mixer valve according to any of the above claims, characterized by an anti-backflow device for the hot and clod water inlet passages and a backflow device in or in combination with the water outlet opening.
